# EUROPEAN PATENT SPECIFICATION

(11) **EP 2 976 865 B1**
(45) Date of publication and mention of the grant of the patent: **15.08.2018**
(21) Application number: 14710944.1
(22) Date of filing: 07.03.2014
(51) Int. Cl.: H04L 29/06

(54) **FIREWALL TESTING**
FIREWALL TEST
TEST DE PARE-FEU

(30) Priority: 18.03.2013 EP 13250029
(43) Date of publication of application: 27.01.2016
(73) Proprietor: British Telecommunications public limited company, London EC1A 7AJ (GB)
(72) Inventor: KEARNEY, Paul, Joseph, London EC1A 7AJ (GB)
(74) Representative: British Telecommunications public limited company Intellectual Property Department
(86) International application number: PCT/GB2014/000086
(87) International publication number: WO 2014/147359

(56) References cited:
- EP-A2- 1 119 151
- US-A1- 2005 076 238
- AL-SHAER E ET AL: "Automated pseudo-live testing of firewall configuration enforcement", IEEE JOURNAL ON SELECTED AREAS IN COMMUNICATIONS, IEEE SERVICE CENTER, PISCATAWAY, US, vol. 27, no. 3, 1 April 2009 (2009-04-01), pages 302-314, XP011254741, ISSN: 0733-8716

## Description

### Field of the Invention

The invention relates generally to testing of a firewall, particularly a firewall for use in a communications network.

### Background of the Invention

In the context of communications networking, firewalls are software or hardware devices acting as gatekeepers enforcing security policy at the borders between computer networks (network firewalls), or at points where a computer connects to a network (host firewalls), to keep them secure. A network firewall may be embodied in dedicated hardware (a firewall appliance), or implemented in software on a general purpose computer with a routing capability or on a multifunction security and/or routing device.

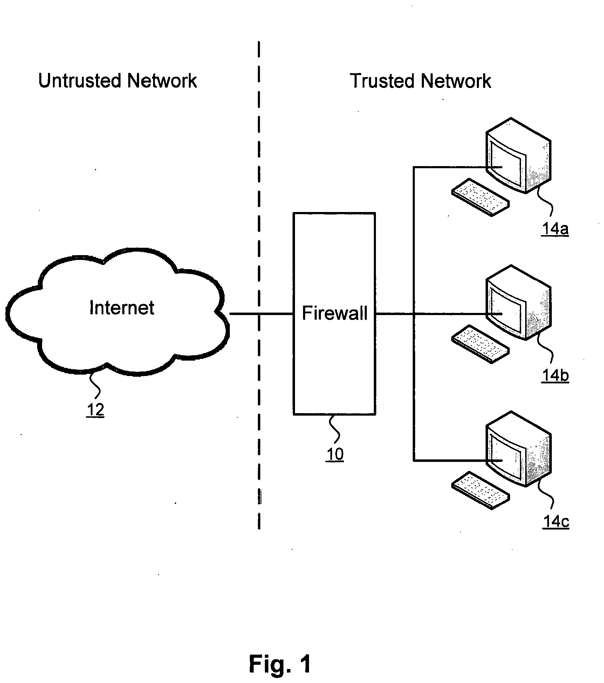

A network firewall appliance will normally be the sole point of connection between two or more networks, though each of these networks may in turn be connected to further networks by other means. A simple example of a firewall deployed in a communications network is shown in Figure 1. As shown in Figure 1, the firewall 10 is provided between a trusted Network 14, such as LAN (Local Area Network) and an untrusted network 12 (in this case, the Internet) to protect the trusted network 14 from the untrusted network 12.

By way of background, when a network firewall receives a data packet on a network interface, it processes the data packet in the following manner.

Basically, the firewall (a) decides whether to block or forward the data packet (packet filtering function), (b) if appropriate it alters certain information in the header of the data packet (address/port translation function), and (c) forwards the packet via another or the same network interface (routing function). The routing function is not often regarded as firewall functionality, but the two are closely related and firewall devices will normally also perform routing, and therefore it is normally useful to treat the two as an integrated capability. The decisions are made based on information provided in the packet header (source address and port, service type, and destination address and port), and the policy configuration of the firewall as determined by files supplied by the firewall administrator. For example, in packet filtering, a configuration file establishes a set of rules that specify the types of packets (e.g. those to or from a particular IP address or port) to be allowed to pass and the types of packets to be blocked. In the case of a "stateful" firewall, packet filtering is performed not only on the basis of a single packet, but on the basis of some historical window of packets on the same port. It would be appreciated by the skilled person in the art that the methods described herein can be applied in "stateless" or "stateful" firewalls, or indeed next generation firewalls.

As would be appreciated, strict verification of the correctness of both firewall implementation and configuration is of paramount importance as a defective implementation or configuration could result in a false sense of security while leaving the trusted internal network exposed to attack. Despite the maturity of firewall products, errors are regularly reported. It would be appreciated that vulnerabilities could arise from errors in either implementation or configuration. Furthermore, there is an interaction between the two as, for example, misunderstanding of the semantics or syntax of the configuration language can easily lead to the behaviour of the firewall being other than intended.

Therefore, there is a need to test configured firewalls to ensure that appropriate security policies are implemented correctly.

The term "correct implementation" as used herein preferably refers to conformance to specification of the firewall appliance or software as supplied. The term "incorrect implementation" as used herein refers to firewall software that does not interpret the configuration files correctly, or does not apply the policies as specified in the configuration files correctly. The term "correct configuration" refers primarily to whether information provided in the configuration files reflects the intended security policies. In addition, the term "configured firewall" as used herein refers to specific combinations of firewall and configuration files.

The type of testing as described herein involves sending a selection of test packets for processing at the firewall's interfaces, and detecting the set of packets that emerge from the firewall's interfaces as a result of its processing of the test set. The observed packets are compared with predictions based on the intended predetermined behaviour of the configured firewall in order to detect any differences between the two.

The behaviour of a configured stateless firewall, which only depends on the packet currently being processed, and not on previous packets or decision, could in principle, be verified completely by testing against every possible packet header. However, the enormous number of possible packet headers, means that exhaustive testing is not practical.

Therefore, it is desirable to be able to perform firewall testing using a selection of test packets that would allow most errors to be detected. More rigorously, it is desirable to test the firewall using a set of test packets that represents an efficient compromise between maximising the probability of detecting any error and the number of packets (and hence time) required for testing. Document AL-SHAER E ET AL: "Automated pseudo-live testing of firewall configuration enforcement", IEEE JOURNAL ON SELECTED AREAS IN COMMUNICATIONS, IEEE SERVICE CENTER, PISCATAWAY, US, vol. 27, no. 3, 1 April 2009 (2009-04-01), pages 302-314, ISSN: 0733-8716 describes a model for firewall testing. Model-based testing is a technique relying on behaviour models of the system under test (SUT) and/or its environment to derive test cases, for testing the functional and non-functional properties of the system. The HOL-TestGen (Higher Order Logic-Test Generator) system (http://www.brucker.ch/projects/hol-testgen/) is a test case generator for specification based unit testing developed by ETH Zurich (Eidgenössische Technische Hochschule Zürich) and its collaborators. HOL-TestGen includes a module that is specific to firewall testing - HOL-TestGenFW. However, it is noted that the HOL-TestGenFW has a number of deficiencies that may prevent it from being implemented as practical solution, which include:
- It requires highly specialised skills to compose an input file that describes the firewall policy specification and instructions on how to process it;
- Except when dealing with policies involving simple network configurations, it takes a prohibitively long time to execute a test case generation run. As well as making the testing cycle unacceptably long this means that it is not practical to assess and improve the quality of the test cases produced;
- The firewall model and the firewall policy implicit in HOL-TestGenFW lack significant features, such as the idea of policy rules being specific to packets inbound and/or outbound at individual interfaces; and
- A failure to take into account domain heuristics in choosing specific test cases (e.g. that implementation errors are likely to occur at boundary cases). This means that common sources of error are overlooked, and that it is not possible to take into account the knowledge of experience testers to improve the quality of the test cases produced.

Thus, it is desirable to:
1. make it easy for a user or administrator to provide a test specification to a test case generator without the knowledge of complicated languages;
2. take into account of the full range of features and variation found in typical enterprise firewalls;
3. execute a test case generation run in a reasonable time, i.e. within a few minutes even for a relatively complex firewall policy typical of a large enterprise context;
4. make use of the knowledge of experience testers to improve the quality of the test cases produced as measured by the probability of detection of configuration and implementation errors.

### Summary of the Invention

The invention provides a method of testing a firewall for use in a communications network, and an equivalent apparatus. More specifically, the method allows a mathematically-formal description of a firewall policy to be defined by a firewall administrator without specialised knowledge in mathematics or formal languages. The firewall administrator constructs a high-level policy model using concepts familiar to persons in that role. The high-level policy model is then used to generate the formal description. The firewall policy model represents an idealisation of the firewall under test, the firewall policy, and the network environment in which the firewall is deployed. An example of the high-level policy model may be an object-oriented model constructed by creating instances of classes corresponding to concepts such as firewall, host, network, interface, rule, etc. An intuitive user interface could be provided, for example, to allow the concepts to be selected from menus to create the objects, the details of which could be described using a mixture of menu-selection, "drag and drop", and text entry.

A test case set comprising one or more test cases is generated based on the formal description derived from the policy model. Each generated test case includes at least one specification of a test packet to be processed by the firewall under test and the expected results of processing the packet by a correctly-functioning firewall. Each test packet in the test case set is subsequently provided to the firewall under test for processing. The outcome of the processing is monitored by observing the packets output by the firewall, and analysed by comparing the processed test packets with the expected results in the generated test case set to determine whether the firewall under test is functioning according to the firewall policy model. Preferably, the generated test case set enables any errors in implementation or configuration of the firewall to be detected with high probability. This is advantageous in that it provides a high probability of error detection from a relatively small number of test packets.

In a first aspect, the present invention accordingly provides a method of testing a firewall for use in a communications network, the method being performed by a firewall test system logically connected to a firewall under test, the method comprising: receiving input data comprising a firewall policy description representing a predetermined performance of the firewall; generating at least one test packet based on the firewall policy description for processing by the firewall and providing the generated test packet to the firewall to be processed by the firewall; probing for one or more data packets emitted by the firewall to detect data packets, and a state of absence of data packets, resulting from the test packet being processed by the firewall; and comparing any detected data packets, and any state of absence of data packets, with the predetermined performance to generate output data representing a result of the comparison, characterised in that generating at least one test packet comprises transforming the firewall policy data into a formal specification representation including a formal definition of the predetermined performance, and wherein the comparison with the predetermined performance is made with reference to the formal definition of the predetermined performance so as to identify whether the firewall implements the firewall policy.

Preferably the method further comprises generating a test case set based on the firewall policy data, wherein said test case set comprises one or more test case.

Preferably the formal specification representation represents said firewall policy model as a mathematical function.

Preferably wherein the set of test case is generated based on the formal specification representation.

In a second aspect, the present invention accordingly provides a computer program product comprising computer executable instructions to cause a computer to become configured to perform a method as described above.

In a third aspect, the present invention accordingly provides a firewall test system adapted for connection to a communications network, the system being logically connectable to a firewall under test, the system comprising: an input device adapted to receive input data comprising a firewall policy description representing a predetermined performance of the firewall; a processor adapted to generate at least one test packet based on the firewall policy description; a data input/output device, in communication with the firewall, adapted to provide the test packet to the firewall to be processed by the firewall; a probe adapted to probe for one or more data packets emitted by the firewall to detect data packets, and a state of absence of data packets, resulting from the test packet being processed by the firewall; and wherein the processor is further adapted to compare any detected data packets, and any state of absence of data packets, with the predetermined performance to generate output data representing a result of the comparison, characterised in that the processor is adapted to generate the at least one test packet by transforming the firewall policy data into a formal specification representation including a formal definition of the predetermined performance, and wherein the comparison with the predetermined performance is made with reference to the formal definition of the predetermined performance so as to identify whether the firewall implements the firewall policy.

Preferably the processor is adapted to generate a test case set based on the firewall policy data, wherein the test case set comprises one or more test case.

Preferably the formal specification representation represents said firewall policy model as a mathematical function.

Generating the test packet from a high-level firewall policy model allows test case generation to be performed without specialised knowledge in mathematics or formal methods. The test case set can be generated such that the execution of the generated test case is likely to detect errors in the system under test. This provides a further technical advantage in that it results in a high probability of error detection from a relatively small number of test packets.

One embodiment provides a computer program product comprising computer executable instructions which, when executed by a computer, cause the computer to perform a method as set out above. The computer program product may be embodied in a carrier medium, which may be a storage medium or a signal medium. A storage medium may include optical storage means, or magnetic storage means, or electronic storage means.

The described embodiments can be incorporated into a specific hardware device, a general purpose device configured by suitable software, or a combination of both. Aspects can be embodied in a software product, either as a complete software implementation, or as an add-on component for modification or enhancement of existing software (such as a plug in). Such a software product could be embodied in a carrier medium, such as a storage medium (e.g. an optical disk or a mass storage memory such as a FLASH memory) or a signal medium (such as a download). Specific hardware devices suitable for the embodiment could include an application specific device such as an ASIC, an FPGA or a DSP, or other dedicated functional hardware means. The reader will understand that none of the foregoing discussion of embodiment in software or hardware limits future implementation of the invention on yet to be discovered or defined means of execution.

### Brief Description of the Drawings

Embodiments will be described with reference to the accompanying drawings, in which:
Figure 1 illustrates a firewall deployed between communications networks;
Figure 2 is a block diagram showing an apparatus according to an embodiment of the invention;
Figure 3 illustrates a high-level system architecture of a firewall test system according to an embodiment of the invention;
Figure 4 illustrates a test execution sub-system in the firewall test system of Figure 3;
Figure 5 illustrates a firewall test planning and analysis sub-system of the firewall test system of Figure 3;
Figure 6 illustrates a flow chart showing a process for testing a firewall according to an embodiment of the invention; and
Figure 7 illustrates a flow chart showing a process for transforming a policy model to a formal specification according to an embodiment of the invention.

### Detailed Description

Specific embodiments of the present invention will be described in further detail on the basis of the attached diagrams. It will be appreciated that this is by way of example only, and should not be viewed as presenting any limitation on the scope of protection sought.

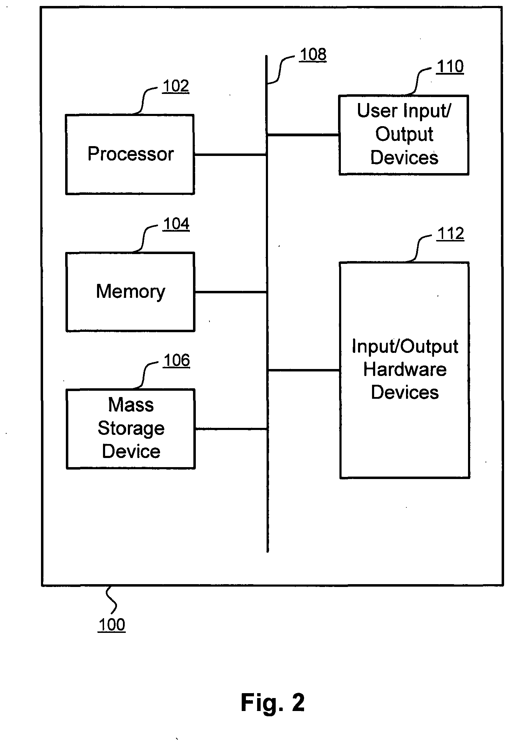

Figure 2 is a block diagram showing an apparatus 100 according to an embodiment of the invention. In an embodiment of the invention, the apparatus 100 is configured to operate as a firewall test system.

The apparatus 100 comprises a processor 102 operable to execute machine code instructions stored in a working memory 104 and/or retrievable from a mass storage device 106. By means of a general purpose bus 108, user operable input/output devices 110 are capable of communication with the processor 102. The user operable input/output devices 110 comprise, in this example, a keyboard and/or a touchpad, but could also include a mouse or other pointing device, a contact sensitive surface on a display unit of a computer terminal, a writing tablet, speech recognition means, haptic input means, or any other means by which a user input action can be interpreted and converted into data signals. Furthermore user operable input/output devices 110 can include a visual display unit, speaker or any other device capable of presenting information to a user.

Input/output hardware devices 112 are further connected to the general purpose bus 108. The input/output hardware devices 112, in the example, are configured to send and receive test data packets to and from the firewall under test.

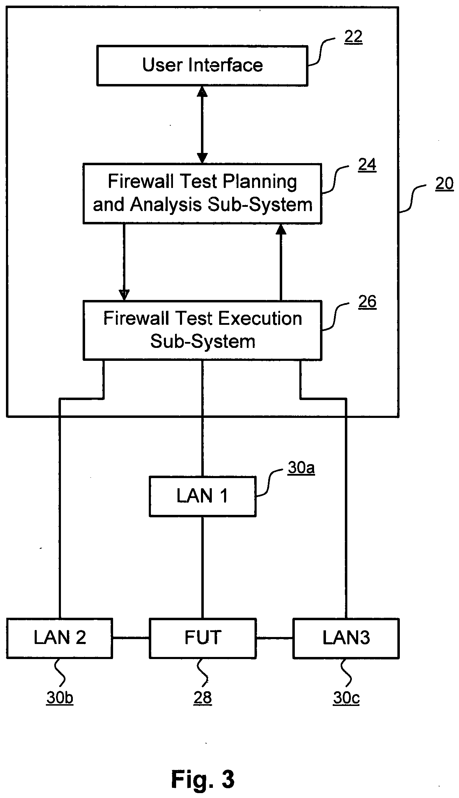

Figure 3 illustrates a high-level system architecture of a firewall test system 20 according to an embodiment of the invention. As illustrated in Figure 3, the firewall test system 20 comprises a user interface 22 to enable communication of data to and from a user (for example, a firewall administrator) by means of input and output devices described in the preceding paragraphs with reference to Figure 2.

In one example, the user interface 22 is configured to receive input data from a firewall administrator. The firewall administrator enters firewall policy information in a relatively simple abstract form. The received input data includes, for example, a firewall policy that can be processed to obtain data for input to a firewall test case generator for generating a set of firewall test cases. The input data also include information used to control various aspects of test case generation and execution, and analysis of the test results. In one embodiment, the firewall policy information includes a firewall policy description representing a predetermined performance of the firewall. The predetermined performance of the firewall is how the firewall is expected to function in view of the firewall policy description, and includes, for example, the expected results or effects of the functioning of the firewall in use.

In one example, the user interface 22 is also configured to display the firewall policy model derived from the input policy information, the generated test cases for review and revision by the firewall administrator, and test results and information arising from the analysis.

The firewall test planning and analysis sub-system 24 of the firewall test system 20 receives the input data from the user interface 22. Based on the received input data, the firewall test planning and analysis sub-system 24 generates a test case set which is communicated to a firewall test execution sub-system 26. The test case set includes at least one test case. Each test case describes a test packet to be processed by a firewall under test, the interface of the firewall at which the packet should be presented, and the expected result (assuming that the firewall is functioning and configured correctly). The expected result specifies whether the firewall should forward a packet, and if so a description of the forwarded packet is provided and the interface from which the packet should emerge is also provided.

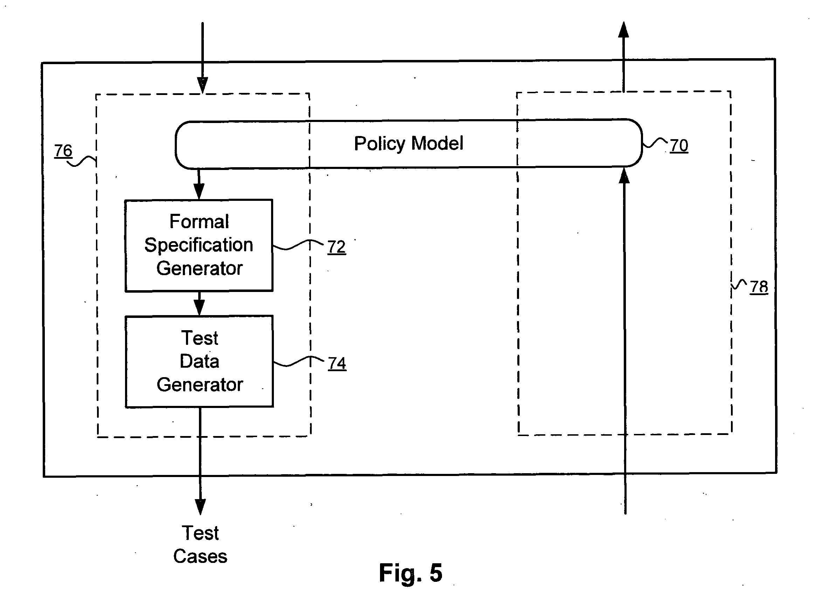

The firewall test planning and analysis sub-system 24 of the firewall test system 20 also receives results of tests being carried out in order to analyse them. For example, correlated records of packets sent to, and received from, the firewall under test are examined in detail to determine their significance in relation to the firewall policy, the firewall, and the test process. Packets received from the firewall and/or, where appropriate, the absence of packets received from the firewall, can be compared with the predetermined performance of the firewall defined or described by the firewall policy. This provides a conclusion of the test (classifying the configured firewall as compliant, non-compliant, and so on), recommendations on modification or continuation of the test, diagnosis of firewall configuration problems to be followed by a re-test, and so on. The specific function of the firewall planning and analysis sub-system 24 will be further described in due course with reference to Figure 5.

The firewall test execution sub-system 26 of the firewall test system 20 receives test case sets from the firewall test planning and analysis sub-system 24 to execute as input to the firewall under test 28. Each test case set is executed by a set of test packets specified in the test case set to the firewall. Each test packet is sent to a specific firewall interface as indicated in the relevant test case. The firewall test execution sub-system 26 also outputs test results to the firewall test planning and analysis sub-system 24.

As shown in Figure 3, the firewall test execution sub-system is connected to three LANs (Local Area Networks) 30a, 30b, 30c, each of which is in turn connected to firewall under test (FUT) 28.

The term "connected" preferably connotes two or more devices connected to establish a communication link or data session between the devices. For example, a communication link or data sessions between the firewall test execution sub-system and the LAN. More importantly, the term "connected" as used herein is not limited to devices being physically connected to each other.

For simplicity, three LANs are illustrated in this example. However, the person skilled in the art will appreciate that any number of LANs could be used. Furthermore, it is appreciated that the number of LANs used will in practice depend on the number of interfaces possessed by the firewall under test, typically one LAN for each interface.

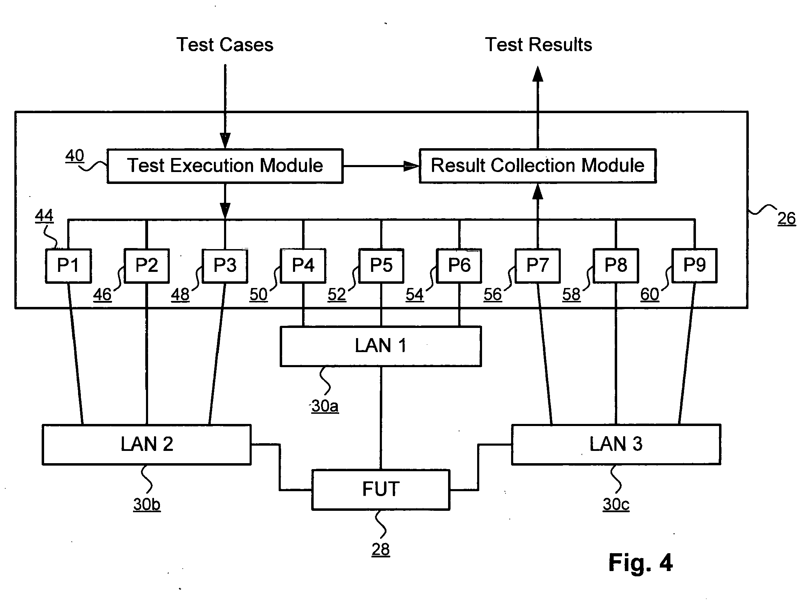

Figure 4 shows a simplified schematic architecture of the firewall test execution sub-system 26 according to an embodiment of the invention. As shown in Figure 4, the tasks of managing and sending of test packets, and of collating and correlating the results are dealt with by specialised modules, such as the Test Execution module 40 and the Result Collection module 42 respectively. The transmission and detection of test packets are performed by modules referred to herein as "probes". In this illustrated example, each of the probes is connected to an interface of the firewall under test via a LAN. In other words, each firewall interface is connected to a separate LAN, and each LAN has at least one probe attached to it, so that packets can be directed to and observed emerging from the respective interfaces of the FUT 28. As known in the art, probes are operable to monitor test packets transiting the LANs that they are connected to, and to inject test packets into them. In the illustrated example, probes 44, 46, 48 are connected to LAN 2, probes 50, 52, 54 are connected to LAN 1, and probes 56, 58, 60 are connected to LAN 3.

By way of background, probes generally perform two basic functions, namely: "injector" and "sniffer". In the "injector" mode, the probes send out test packets according to the test instructions, and in the "sniffer" mode the probes report test packets that have been observed. It will be appreciated that these two basic modes are sufficient for testing stateless firewalls. However, testing of stateful firewalls would require an additional "responder" function. This allows the probes to generate and send appropriate replies to packets belonging to certain protocols. In general, a probe may embody any combination of these three roles.

Each probe has associated with it a set of instructions describing test packets to be sent. The set of instructions is generated by the Test and Execution module 40 based on test cases, information on the roles of the probe, and the firewall interface to which it has access. The set of instructions may include instructions to instruct the probe to pause for a specified time or to change the time at which the test packets are sent. Processing of the set of instructions can be initiated by a command from the Test and Execution module 40 to the probe.

Each test packet is constructed by the Test and Execution module 40 and each packet includes in the packet body a "token" that allows the packet to be identified unambiguously, to identify the probe from which the packet it sent, and other information such as sequence number and/or timestamp. As shown in Figure 4, a record of test packets generated and transmitted is also provided to the Results Collection module 42.

The Test and Execution module 40 is also operable to send a command to instruct the probes to "listen" or "sniff' for test packets. Upon detection of a test packet containing a test packet token, the probe reports it to the Results Collection module 42.

The Results Collection Module 42 receives reports from the probes describing packets sent and packets observed during a test run, Each report includes a description of the header data of the packet and any token (as described) above in the packet body. The tokens should not be modified by the firewall, and are used by the Results Collection Module 42 to correlate observed (output) packets with corresponding (input) packets sent to the firewall. If no output packet has been reported by the end of test run duration (i.e. after a suitable time-out period) that can be correlated with a given input packet, the Results Collection Module 42 determines the absence of a packet and concludes that the packet has been blocked by the firewall.

The Results Collection Module 42 also receives from the Test Execution Module 40, information derived from the test case set describing test packets and expected results, or predetermined performance. It compares test packet specifications from the test case set with the records of packets sent by the probes to correlate test cases with observed results. It then compares the expected result with the actual result for each test case and notes whether the test case has been passed or failed. The results for the test run are collected and communicated to the firewall test planning and analysis sub-system 24. The test results include for each test case, the test case information, description of packets sent and received, and whether the test case has passed or failed. Any anomalies, such as observation of an output packet with no corresponding input packet, are also noted in the test results.

The function of the firewall planning and analysis sub-system 24 will now be described with reference to Figure 5.

Figure 5 illustrates a simplified architecture of the firewall test planning and analysis sub-system according to an embodiment of the invention. As shown in Figure 5, the firewall test planning and analysis sub-system comprises a test planning module 76 and a results analysis module 78 that share access to a policy model 70. The test planning module 76 further comprises a formal specification generator 72 and a test data generator 74.

In this example, the role of the test planning module 76 is to receive a description of a firewall policy from a firewall administrator and to produce a set of test cases that can be used to test whether a configured firewall implements the policy correctly. The process of capturing the firewall policy is effectively a dialogue between the user and the test planning module 76 that results in construction of a data structure representing the policy within the test planning module 76. Providing the policy description is most effective and easiest for the user if the user-system dialogue and hence the form of the data structure are well aligned with the way the user thinks about the policy. Conversely, the test planning module 76 also needs to represent the policy in a form that can be input to a test case generation process. It is a key aspect of the invention that rather than having a single internal representation of the policy that is both aligned with the user's view of a policy and can be used for test data generation, two separate representations related by a transformation process are used.

In this example, the high level, user-oriented policy representation will be referred to as the policy model and the low level, test-case-generation-oriented policy representation will be referred to as the formal specification.

A well-defined policy model, as will be described in due course, not only results in effective capture of the policy description from the user, but also simplifies the process of creating the formal specification from it. A further advantage of this approach is that the policy model can also be transformed into low-level representations suitable for other purposes such as firewall configuration or policy analysis.

The formal specification generator 72 extracts information from the policy model 70 and re-writes this information into a format that is suitable for input to the test data generator 74. Subsequently, the test data generator 74 produces test cases based on the formal specification. The test data generator 74 can be a specifically written module that is integral part of the firewall test planning and analysis sub-system 24 or could make use of an external model-based testing tool such as HOL-TestGenFW.

The preferred approach is to apply a transformation to the policy model 70 to create first an internal representation of the formal specification that can be used as input to an internal test data generator, and can also be rendered textually or graphically for inspection by a user or export to an external program. In other words, the internal representation expresses the formal specification according to an abstract syntax for which various alternative concrete syntaxes can be defined.

A particular example of an external test data generator is HOL-TestGenFW. This requires an input file expressed in a particular, specialised, mathematical programming language "Isar" that is used by the Isabelle theorem-proving software on which HOL-TestGenFW is built. The input file includes a rendering of the formal specification. The preferred approach is to generate the relevant part of the input file from the internal representation of the formal specification and the remainder from templates completed using information from the policy model and related data structures. It is also possible to generate the Isar rendering of the formal specification from the policy model directly without explicit use of an internal representation. However, the preferred approach is more modular and flexible.

In the described embodiment of the invention, model-based test case generation refers to the automated production of test cases from a mathematically-formal representation of the correct behaviour of the system under test. In one example, the representation is as a mathematical function that for any input presented to the system (including state variables), predicts the output produced (including updates to state variables). In general, a test case would have to be produced for every possible input in order to prove by testing that the system has the correct behaviour. However, it is rare that a system would be implemented as a look-up table, such that each possible input is processed differently; much more likely that blocks of "similar" or "adjacent" input values are processed by the same code, with a few exceptional special cases. Model-based test data generation examines the mathematical properties of the specification of the correct system behaviour in to order to select a set of test points that is likely to exercise the main independent pathways through the system under test, then calculates the correct output for each of these test points. Intuitively, test case generation of this form involves re-writing the given specification as a set of simpler functions that apply to disjoint regions of the input space, then selecting test cases that sample the input spaces of each of the sub-functions.

The following sections describe the policy model and the formal specification.

### The Policy Model

The policy model 70 is the system's representation of the problem domain in a form that can be easily shared with the human policy administrator. As will be described in the forthcoming paragraphs, a major part of the policy model 70 is an idealisation of the firewall under test, firewall policies, and network context. The policy model 70 also holds test results and information that are related to the tests. This allows the firewalls, policies, and network context to be taken into account in results analysis and it also allows results of earlier test runs to be utilised for planning subsequent tests.

The policy model must a) facilitate the dialogue with the user in order to capture a description of the policy that the firewall must implement, and b) represent the policy in a form from which a formal specification can be generated. In order to meet the first requirement, it is beneficial for the policy model to represent a policy in similar terms to the way the user thinks about it.

A firewall policy starts off as a requirement to prevent or constrain communication between networked computers in order to protect the confidentiality, integrity and availability of an organisation's information, computation and network security without interfering unduly with the efficient running of the organisation's business processes. A good guiding principle is to allow only those communications that are necessary for execution of the business processes and to block all others. A communication can be characterised by its end-points (sender and receiver) and the nature of the communication. Normally, a given computer hosts applications, data and users with related roles and similar trust levels. Furthermore, computers hosting related services, data and users are normally collected into sub-networks. Similarly, a given application will communicate using particular communications services.

One aspect of a firewall policy is then to permit or forbid communications between pairs of hosts via specified services, where the hosts may be identified individually or based on which (sub-)network they belong to. Clearly, a firewall can only enforce policies with respect to communications that pass through it. Consequently, firewalls are positioned at key traffic choke/concentration points such as at the boundaries between security domains. Figure 1 gives a very simple example of a firewall at the boundary of an internal 'Trusted' domain and an external 'Untrusted' domain. The firewall in Figure 1 has two interfaces ('internal' and 'external'), but in general there may be more (or indeed fewer). Furthermore, it would be simplistic to assume that everything attached via one interface is either trusted or untrusted. For example, it would be quite normal for branch offices of a small company to communicate with the main office via the Internet, so that traffic from a trusted branch office LAN would arrive at the head office firewall at its external interface.

A further aspect of a firewall policy concerns rejection of anomalous communications. It is relatively easy, for example, to lie about the identity of the source of a communication. Consequently, it is sensible for a policy to block communications that arrive at the "wrong" interface, e.g. communications apparently from an internal address that arrive at an external interface.

A third aspect of firewall policy concerns hiding of information about network topology. Typically, this manifests itself as translation between internal, private addresses/ports and external, public ones. This may be done to protect security or to avoid the heed to register unique public addresses for computers on an internal network.

Conventionally, firewall policies are viewed as sets of rules, each of which contains rules of given type:
- Access policy rules deal with allowing or blocking a communication,
- Network and port address translation (NAT/PAT) rules deal with changing source and/or destination addresses and port number
- Routing rules deal with where packets are sent on leaving the firewall (routing is not strictly speaking a firewall function, but routing policy and access and NAT/PAT policies need to be considered together).

Each rule has a condition part, dictating which communications the rule applies to, and an action part, dictating what should be done when the rule applies. Properties that can be referenced in the condition part include the source and destination hosts or networks, the firewall interface that the communication arrives or leaves at, the communication protocol and the source and destination port numbers. Rules within a rule set are arranged in order of precedence such that the action part of the first rule whose condition matches a communication is applied.

One widely adopted approach to modelling that is suitable for the policy model is Object-Oriented Modelling (OOM). In OOM concepts in the problem domain (e.g. 'Firewall', 'Network', 'Address', 'Policy Rule', etc) are represented as classes, which may be thought of as templates for objects representing specific instances of the class/concept. An object-oriented model is a collection of objects linked by references denoting uni-directional or mutual relationships between the objects. One particular type of reference is "containment" indicating that the object referred to is a constituent part of the referring object. A common way of representing an object-oriented model visually is as one or more inverted trees reflecting the containment hierarchy. In a user interface based on such a containment tree, a user might build a model by creating a root object and then adding objects that are contained by the root. The tree can then be extended by adding further objects contained by these, and so on. Other non-containment references can then be added linking objects in the tree. Note that the class definitions prescribe what containment and other references an object of a given type may have.

The following is a suitable set of main concepts/classes in a firewall Policy Model:
Network objects and related concepts:
   - IP Address
   - IP Address Range
   - IP Network
   - Interface
   - Host
   - Service
Firewalls and rules:
   - Firewall
   - Rule Set
   - Access Policy Rule
   - NAT Rule
   - Routing Rule

### The Formal Specification

The formal specification is an abstract description of the firewall policy as a mathematical function. A mathematical function is a recipe for "mapping" points in its "domain" of possible input values to points in its "range" of possible output values. For the firewall formal specification, the domain and range are chosen to be defined by a data type that is an abstract representation of an IP packet plus its location. The elements of the formal packet data type are:
- Source address
- Destination address
- Protocol
- Source port
- Destination port
- Buffer

The addresses and ports are modelled as integers, the protocol and buffer as enumerated types. Note that the source and destination ports are not used by all protocols.

The meaning of most of the elements is self-evident, but the buffer needs some explanation. It models the location within the firewall in which the packet currently resides. A packet may arrive at one of several network interfaces possessed by the firewall, and is either blocked by the firewall or else emerges, possibly with some of its elements modified, at another interface. It is considered that a packet arriving at an interface as being placed in an input buffer for that interface. Similarly, it is considered that once the firewall has finished processing a packet, it places it in an output buffer of one of the interfaces or else in a special buffer for blocked packets. In general, there may be additional "internal" buffers for packets at various intermediate stages of processing.

A partial ordering is defined on the set of buffers so that any pair of buffers can be compared using "less than" (<), "greater than" (>) and "is equal to" (=) operators. One way of defining such an ordering is to associate an integer value with each buffer. For any given policy function, the buffers used in its domain must all be < the buffers used in its range.

It is considered that the overall firewall policy function is made up of simpler functions that also act on the formal packet data type and are composed sequentially or in parallel. Two forms of parallel composition are possible. In 'or-parallel' composition, the sub-functions act on disjoint partitions of "packet" space as dictated by a test condition (similar to an "if-then-else" structure in a programming language), and only one sub-function is applied. In "and-parallel" composition, all sub-functions are applied, and the outputs need to be merged according to rules of precedent.

Atomic policy functions, i.e. ones that are not composed from sub-functions in this way, are known as "formal rule sets" (the prefix 'formal' is used to distinguish the rules, rule sets, etc. appearing in the formal specification from similar concepts appearing in the policy model). Formal rule sets contain ordered lists of formal rules. Each rule has a condition part and an action part. The condition part comprises at most a single test for each element in the packet data type, signifying a range of values for the element that satisfy the test. For an integer element, a test is characterised by inclusive lower and upper bounds; for an enumerated element a test is characterised by a list of values that pass the test. A packet satisfies the condition if and only if all elements of the packet pass the relevant test. If no test is specified for a given element, then any value for that element passes.

The action part comprises at most one instruction for each element in the packet description that describes how the respective element in the input packet is changed to obtain the corresponding element of the output packet. If no instruction is specified for a given element, the output is the same the input.

If a packet satisfies the condition part of a rule, then the rule is said to match. The actions specified in the first rule in the rule set that matches an input packet description are applied to the input packet description to obtain the output packet description, in which case that rule is said to "fire". To be a valid mathematical function, every possible packet description in the domain of the rule set must match at least one rule.

As in the case of the Policy Model, it is convenient to follow an OOM approach to the internal representation of the Formal Specification. Thus, the various concepts discussed above are modelled as classes, including:
- Formal specification, the main class
- Policy function
- Buffer
- Protocol
- Formal rule set
- Formal rule
- Formal test
- Formal action
- Workflow, being a description of how the overall policy function of the Formal Specification is composed from the rule sets

A formal specification object contains:
- A collection of buffer objects, each buffer having an associated integer precedence level
- A collection of protocol objects
- A collection of formal rule set objects
- A Workflow object
- A policy function that is constructed by assembling the ruleset objects according to the instructions contained in the workflow object

A formal ruleset object contains:
- A collection of formal rules

A formal rule contains
- A condition part, being a collection of formal test objects
- An action part, being a collection of formal action objects.

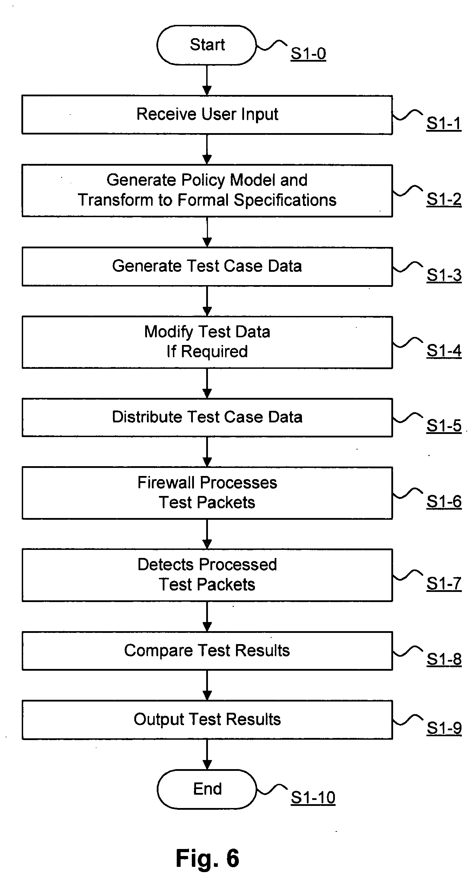

A process of testing a firewall according to an embodiment of the invention will now be described with reference to the flow chart of Figure 6. The process begins at step S1-0.

Step S1-1: The user input device 110 receives input data comprising firewall policy data including a firewall policy description. The policy data is a description of desired firewall behaviour similar to that which a firewall engineer would provide a high level firewall configuration software tool. In this embodiment, the data can be provided via a graphical user interface. The policy data primarily concerns rules describing circumstances in which a firewall should (a) block packets (access policy rules), (b) apply network address translation (NAT), and (C) routing and network entities (for example, networks, address ranges, hosts, etc) that are referenced in the rules.

### Step S1-2:

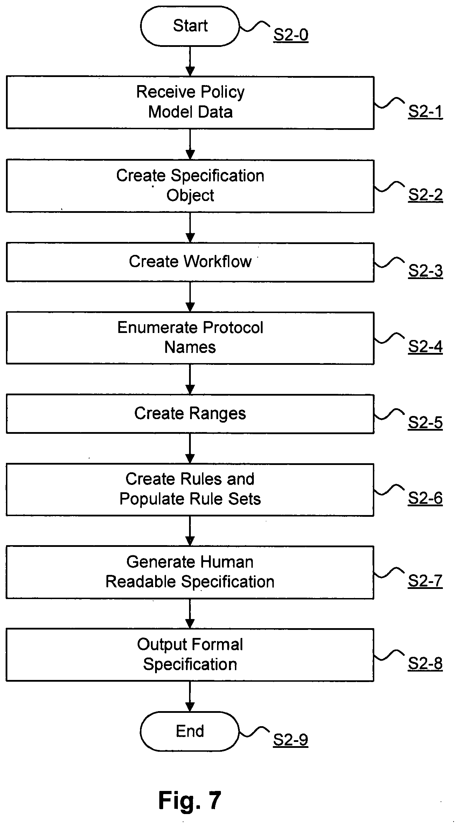

(a) The processor 102 creates a policy model based on the provided policy data. As described above, the policy model is a collection of data structures representing an idealisation of the firewall under test, a firewall policy, and the network environment in which the firewall under test is deployed. In this embodiment, the policy model is object-oriented. This means that the policy data is interpreted as instructions to instantiate "objects" of various types from pre-existing class definitions, adding them to allowed places in the model, and modifying their properties to conform to the policy data. The term "model" as used herein in relation to the firewall policy preferably connotes a representation or description of the firewall under test, its associated rules, and the environment in which the firewall under test is deployed.
   The categories of object represented by the policy model data include:
   ∘ the firewalls;
   ∘ rules dealing with (a) blocking or passing packets (access policy rules), (b) network address translation (NAT), and (c) routing. These rules are held in rule sets that are contained in the firewall objects;
   ∘ entities (for example, networks, address ranges, hosts, etc) that are referenced in the rules and other objects.
(b) The processor 102 transforms the policy data into a format that can be used to generate test data, such as by transforming the policy model data. The result of this transformation is a formal specification of a firewall policy, or a set of firewall policies, represented by policy data, such as represented by the policy model. The specific method of the transformation will be described in due course with reference to Figure 7.

Step S1-3: The processor 102 generates test data based on the formal specification. In one example, the test data is generated using an external test data generator tool such as the HOL-TestGenFW. In another example, the test data can be generated using a purpose written module that is an integral part of the firewall testing system.

Step S1-4: The generated test data are provided to the output device 112 to be reviewed by the user. If changes need to be made to the test data, it will be edited by the user via the user input device 110.

Step S1-5: With reference to Figure 4, the test case data is provided to the test execution module 40 where it is sorted according to the firewall interface it applies to and is used to instruct each probe as to the packets that need to be sent are provided to the output device 112. Each test case is executed by presenting appropriate test packet to a specified firewall interface. The test packets are sent by the probe to a corresponding interface of the FUT to which the probe is connected.

Step S1-6: The test packets are provided to the network interface device and each is sent to its allocated firewall interface. With reference to Figure 4, the test packet data are sent based on information provided to the probe by the test execution module 40. The test packet data are processed by the FUT. As a result of processing each test packet, a correctly functioning firewall may forward the packet from one of its interfaces or else block the packet. Any forwarded packet may have altered header information compared to the input test packet. The outcome depends on the configuration files provided to the firewall by the firewall administrator as well as the implementation of the firewall by its manufacturer.

Step S1-7: The network interface device (e.g. the probe in Figure 4) detects the processed test packet data from the FUT's interfaces and passes them to the processor 102. The probes (P1 to F9 in Figure 4) monitor the detected test packet data and notify the Result Collection Module 42 in Figure 4 accordingly.

Step S1-8: The processor 102 compares the detected test packet data with the expected results as documented in the generated test case data.

Step S1-9: The result of the comparison is provided to the user via the data output device 112. The user may make use of the facilities of the analysis module 78 to examine the implications of the results in more detail.

The process terminates at step S1-10.

Step S1-2 will now be described in more detail with reference to Figure 7, which describes the process of generating a formal specification to which Model-Based Test Case Generation techniques can be applied.

The process begins at step S2-0.

Step S2-1: By this stage, the Policy Model will already exist as a complex data structure held in memory 104 or as data on a mass storage device 106 as a result of performing Step S1-1. If it is not currently held in memory, the processor 102 regenerates it in memory from data on mass storage now.

Step S2-2: The processor 102 receives data from the user via the input user device 110 identifying a test configuration data structure that includes a reference to the firewall in the Policy Model that will be used as a basis of the formal specification. A data structure representing the formal specification (the Specification Object) is created in the memory and added to the test configuration data structure.

Step S2-3: The processor 102 receives data from the user via the input user device 110 indicating which template is to be used as a basis for the Workflow Object (a data structure representing the rule sets used in the formal specification and how they are combined using sequential and parallel operators). A Workflow Object is then created in memory based on this template and is added to the formal specification data structure. One example of a workflow template defines what will be referred to here as the standard workflow, which is a sequential composition of the following rule sets:
1. A set of NAT rules that are applied to packets inbound to the firewall
2. A set of access policy rules that are applied to packets inbound to the firewall
3. A set of routing rules.
4. A set of NAT rules that are applied to packets outbound from the firewall
5. A set of access policy rules that are applied to packets outbound from the firewall Another example of a workflow template defines what will be referred to here as the HOL-TestGenFW workflow, which is a parallel composition of the following rule sets:
6. A set of access policy rules
7. A set of NAT rules.

BufferSet objects are also created and added to the FormalWorkflow. Each of these contains a set of references to a combination of buffers that is the source and/or destination of a FormalRuleSet in the normal workflow and is associated with the ordering relationship linking the FormalRuleSets.

Step S2-4: The processor 102 searches through the Policy Model for service objects referenced in the firewall rules and compiles a list of unique protocol names used in them. A corresponding list of protocol objects is created and added to the specification object. This list essentially defines the enumerated type of the protocol element of the packet data type.

Step S2-5: The processor 102 searches through the Policy Model for objects with network addresses referenced directly or indirectly in the firewall rules. An IntegerRange object is created for each of these, and the list of ranges added to the specification object. An IntegerRange has integer properties corresponding to inclusive minimum and maximum values. The integer values are obtained by interpreting IPv4 addresses (conventionally represented as four eight-bit integers separated by dots) as base 256 integers then expressing these in base 10. In the case of address ranges or networks, the minimum and maximum values correspond to the lowest and highest numbers addresses that are part of the network or address range. In the case of objects with discrete address, the minimum and maximum values are of the IntegerRange are equal. A null value for the minimum or maximum indicates the lowest or highest possible integer value respectively.

Similarly, a pair of IntegerRange objects is created for each Service object referenced in a rule in the firewall rules, one for the source port range and the other for the destination port range.

Alternatives to creating the ranges at this point in the process include:
- Creating them when the networks objects are initialised and refreshing them if the addresses are changed
- Creating them on demand the first time a network object or service is encountered when creating the rules in the formal specification (see below).

S2-6: The following procedure is carried out for each firewall rule.

For each combination of source, destination, service, interface and direction, a FormalRule is created. The following steps are performed for each FormalRule:
8. References to the appropriate IntegerRange and protocol objects are added to the corresponding components of the condition part of the rule
9. A reference to the appropriate Buffer object is made in the buffer test element of the rule's condition part
10. Appropriate actions are added to the action parts of the FormalRule based on the type of (policy model) rule being processed and its action-related content. For example, an instruction to replace the source address element may be added to the action part of a FormalRule derived from a NAT rule. Similarly, an instruction to change the buffer element to a reference to the blocked buffer will be added to the action part of a FormalRule derived from a 'deny' access policy rule.
11. The FormalRule is added to the appropriate FormalRuleSet based on the interface, direction and rule type.

S2-7: Assume a context-free grammar has been defined that provides a concrete syntax for the specification as a whole and each of its constituent elements (FormalWorkflow, FormalRuleSet, FormalRule, IntegerRange, FormalAction, etc.). A convenient way of generating a plain text rendering is the following:
A method, e.g. specString is defined on each relevant class FormalSpecification, FormalWorkflow, FormalRuleSet, RuleFunction, IntegerRange, FormalAction, etc.) that gives a rendering of an instance of that class according to the context-free grammar making recursive use of the specString methods of "constituent" objects if appropriate. The text is then generated by calling <FormalSpecification>.specString(), which assembles the overall text making use of the results of calling specString() on first level of constituents, which in turn make use of the results of calling specString() on second level of constituents, and so on until the lowest level is reached.

An alternative approach is to use an analogous procedure to generate a representation of a formal specification in an XML-based syntax, and then use e.g. an XSLT script to generate a human-readable rendering from the XML. This has the advantage that the ability to generate representations of the specification according to alternative syntaxes can be provided by simply defining additional XLST scripts that use the same XML as input.

Representations for presentation in folding editors, etc. can be generated using modified versions of this approach.

S2-8: If an external test data generator is to be used, an input file of the required format is created from the internal representation of the formal specification plus additional information from the Policy Model and input from the user. The process of producing the input file depends on the external test data generator in question, but will typically involve instantiating a template and 'completing' it by replacing placeholders with appropriate strings and inserting a rendering of the formal specification in the appropriate formal language. Ways of rendering the formal specification according to a concrete textual syntax are described in S2-7.

In the case of HOL-TestGenFW, the formal specification corresponds to the Network definition and Policy definition sections of the input file. The Network Definition section is based on the IntegerRange objects of the internal representation. The Policy Definition section includes an access policy definition and a NAT policy definition, each consisting of a list of access policy rules linked by an 'override operator' symbol indicating that the first matching rule is to be used. These rule set definitions are followed by an instruction to compose the access and NAT policy functions to obtain the definition of an overall policy function.

As described in the preceding paragraphs the input data file for an external Test Data Generator is generated from the policy model in two steps, with Formal Specification as an intermediate representation. Alternatively, these two steps can be combined, eliminating explicit use of the formal specification.

While the foregoing specific description of an embodiment of the invention has been provided for the benefit of the skilled reader, it will be understood that it should not be read as mandating any restriction on the scope of the invention. The invention should be considered as characterised by the claims appended hereto, as interpreted with reference to, but not bound by, the supporting description.

## Claims

1. A method of testing a firewall for use in a communications network, the method being performed by a firewall test system logically connected to a firewall under test, the method comprising:
receiving input data comprising a firewall policy description representing a predetermined performance of the firewall;
generating at least one test packet based on the firewall policy description for processing by the firewall and providing the generated test packet to the firewall to be processed by the firewall;
probing for one or more data packets emitted by the firewall to detect data packets, and a state of absence of data packets, resulting from the test packet being processed by the firewall; and
comparing any detected data packets, and any state of absence of data packets, with the predetermined performance to generate output data representing a result of the comparison,
**characterised in that** generating at least one test packet comprises transforming the firewall policy description into a formal specification representation including a formal definition of the predetermined performance as a mathematical function, and
wherein the comparison with the predetermined performance is made with reference to the formal definition of the predetermined performance so as to identify whether the firewall implements the firewall policy.

2. A method according to claim 1, further comprising the step of generating a test case set based on the firewall policy data, wherein said test case set comprises one or more test case.

3. A method according to claim 2 wherein the set of test case is generated based on the formal specification representation.

4. A computer program product comprising computer executable instructions to cause a computer to become configured to perform a method according to any one of the preceding claims.

5. A computer product according to claim 4 comprising a computer readable storage medium.

6. A firewall test system adapted for connection to a communications network, the system being logically connectable to a firewall under test, the system comprising:
an input device adapted to receive input data comprising a firewall policy description representing a predetermined performance of the firewall;
a processor adapted to generate at least one test packet based on the firewall policy description;
a data input/output device, in communication with the firewall, adapted to provide the test packet to the firewall to be processed by the firewall;
a probe adapted to probe for one or more data packets emitted by the firewall to detect data packets, and a state of absence of data packets, resulting from the test packet being processed by the firewall; and
wherein the processor is further adapted to compare any detected data packets, and any state of absence of data packets, with the predetermined performance to generate output data representing a result of the comparison,
**characterised in that** the processor is adapted to generate the at least one test packet by transforming the firewall policy description into a formal specification representation including a formal definition of the predetermined performance as a mathematical function, and
wherein the comparison with the predetermined performance is made with reference to the formal definition of the predetermined performance so as to identify whether the firewall implements the firewall policy.

7. The system according to claim 6, wherein the processor is adapted to generate a test case set based on the firewall policy data, wherein the test case set comprises one or more test case.

## Patentansprüche

1. Verfahren zum Testen einer Firewall zur Anwendung in einem Kommunikations-Netzwerk, wobei das Verfahren durch ein System zum Firewall-Test durchgeführt wird, das mit einer zu testenden Firewall logisch verbunden ist, wobei das Verfahren umfasst:
Empfangen von Eingabedaten, die eine Beschreibung der Firewall-Policy enthalten, die eine vorgegebene Leistungsfähigkeit der Firewall darstellt;
Erzeugen mindestens eines Testpakets auf der Basis der Beschreibung der Firewall-Policy zur Verarbeitung durch die Firewall und Liefern des erzeugten Testpakets an die Firewall, das durch die Firewall zu verarbeiten ist;
Prüfen auf ein Datenpaket oder mehrere Datenpakete, die durch die Firewall ausgegeben werden, zum Erfassen von Datenpaketen und eines Zustands des Fehlens von Datenpaketen als Ergebnis der Verarbeitung des Testpakets durch die Firewall und
Vergleichen erfasster Datenpakete und eines Zustands des Fehlens von Datenpaketen mit der vorgegebenen Leistungsfähigkeit zur Erzeugung von Ausgangsdaten, die ein Ergebnis des Vergleichs darstellen,
**dadurch gekennzeichnet, dass** das Erzeugen mindestens eines Testpakets umfasst: Umwandeln der Beschreibung der Firewall-Policy in eine formale Spezifikations-Darstellung, die eine formale Definition der vorgegebenen Leistungsfähigkeit als eine mathematische Funktion beinhaltet, und
wobei der Vergleich mit der vorgegebenen Leistungsfähigkeit unter Bezug auf die formale Definition der vorgegebenen Leistungsfähigkeit durchgeführt wird, um zu ermitteln, ob die Firewall die Firewall-Policy implementiert.

2. Verfahren nach Anspruch 1, das ferner den folgenden Schritt umfasst: Erzeugen eines Testfall-Satzes auf der Basis der Daten der Firewall-Policy, wobei der Testfall-Satz einen Testfall oder mehrere Testfälle umfasst.

3. Verfahren nach Anspruch 2, bei dem der Testfall-Satz auf der Basis der formalen Spezifikations-Darstellung erzeugt wird.

4. Computerprogramm-Produkt, das durch Computer ausführbare Befehle umfasst, um zu veranlassen, dass ein Computer so konfiguriert wird, dass er ein Verfahren nach einem der vorhergehenden Ansprüche durchführt.

5. Computer-Produkt nach Anspruch 4, das ein computerlesbares Speichermedium enthält.

6. System zum Firewall-Test, das zur Verbindung mit einem Kommunikationssystem ausgebildet ist, wobei das System mit einer zu testenden Firewall logisch verbindbar ist, wobei das System umfasst:
eine Eingabevorrichtung, die dazu ausgebildet ist, Eingabedaten zu empfangen, die eine Beschreibung der Firewall-Policy enthalten, die eine vorgegebene Leistungsfähigkeit der Firewall darstellt;
einen Prozessor, der dazu ausgebildet ist, mindestens ein Testpaket auf der Basis der Beschreibung der Firewall-Policy zu erzeugen;
eine Daten-Eingabe/Ausgabevorrichtung in Verbindung mit der Firewall, die dazu ausgebildet ist, das Testpaket an die Firewall zu liefern, das durch die Firewall zu verarbeiten ist;
eine Prüfeinrichtung, die ausgebildet ist zum Prüfen auf ein Datenpaket oder mehrere Datenpakete, die durch die Firewall ausgegeben werden, und eines Zustands des Fehlens von Datenpaketen als Ergebnis der Verarbeitung des Testpakets durch die Firewall, und
wobei der Prozessor ferner dazu ausgebildet ist, erfasste Datenpakete und einen Zustand des Fehlens von Datenpaketen mit der vorgegebenen Leistungsfähigkeit zu vergleichen, um Ausgangsdaten zu erzeugen, die ein Ergebnis des Vergleichs darstellen,
**dadurch gekennzeichnet, dass** der Prozessor dazu ausgebildet ist, das mindestens eine Testpaket zu erzeugen durch Umwandeln der Beschreibung der Firewall-Policy in eine formale Spezifikations-Darstellung, die eine formale Definition der vorgegebenen Leistungsfähigkeit als eine mathematische Funktion beinhaltet, und
wobei der Vergleich mit der vorgegebenen Leistungsfähigkeit unter Bezug auf die formale Definition der vorgegebenen Leistungsfähigkeit durchgeführt wird, um zu ermitteln, ob die Firewall die Firewall-Policy implementiert.

7. System nach Anspruch 6, bei dem der Prozessor dazu ausgebildet ist, einen Testfall-Satz auf der Basis der Daten der Firewall-Policy zu erzeugen, wobei der Testfall-Satz einen Testfall oder mehrere Testfälle umfasst.

## Revendications

1. Procédé de test d'un pare-feu pour une utilisation dans un réseau de communications, le procédé étant mis en oeuvre par un système de test de pare-feu connecté logiquement à un pare-feu en test, le procédé comprenant :
la réception de données d'entrée comprenant une description de politique de pare-feu représentant une performance prédéterminée du pare-feu ;
la génération d'au moins un paquet de test sur la base de la description de politique de pare-feu pour traitement par le pare-feu et la fourniture du paquet de test généré au pare-feu pour être traité par le pare-feu ;
le sondage pour un ou plusieurs paquets de données émis par le pare-feu pour détecter des paquets de données, et un état d'absence de paquets de données, résultant du paquet de test étant traité par le pare-feu ; et
la comparaison de tous paquets de données détectés, et d'un état quelconque d'absence de paquets de données, avec la performance prédéterminée pour générer des données de sortie représentant un résultat de la comparaison,
**caractérisé en ce que** la génération d'au moins un paquet de test comprend la transformation de la description de politique de pare-feu en une représentation de spécification formelle incluant une définition formelle de la performance prédéterminée comme une fonction mathématique, et
dans lequel la comparaison avec la performance prédéterminée est exécutée en référence à la définition formelle de la performance prédéterminée de manière à identifier si le pare-feu met en oeuvre la politique de pare-feu.

2. Procédé selon la revendication 1, comprenant en outre l'étape de génération d'un ensemble de cas de test sur la base des données de politique de pare-feu, dans lequel ledit ensemble de cas de test comprend un ou plusieurs cas de test.

3. Procédé selon la revendication 2 dans lequel l'ensemble de cas de test est généré sur la base de la représentation de spécification formelle.

4. Produit de programme informatique comprenant des instructions exécutables par ordinateur pour faire en sorte qu'un ordinateur devienne configuré pour exécuter un procédé selon l'une quelconque des revendications précédentes.

5. Produit informatique selon la revendication 4 comprenant un support de stockage lisible par ordinateur.

6. Système de test de pare-feu adapté à une connexion à un réseau de communications, le système pouvant être connecté logiquement à un pare-feu en test, le système comprenant :
un dispositif d'entrée adapté à recevoir des données d'entrée comprenant une description de politique de pare-feu représentant une performance prédéterminée du pare-feu ;
un processeur adapté à générer au moins un paquet de test sur la base de la description de politique de pare-feu ;
un dispositif d'entrée/sortie de données, en communication avec le pare-feu, adapté à fournir le paquet de test au pare-feu pour être traité par le pare-feu ;
une sonde adaptée à sonder pour un ou plusieurs paquets de données émis par le pare-feu pour détecter des paquets de données, et un état d'absence de paquets de données, résultant du paquet de test étant traité par le pare-feu ; et
dans lequel le processeur est en outre adapté à comparer tous paquets de données détectés, et un état quelconque d'absence de paquets de données, avec la performance prédéterminée pour générer des données de sortie représentant un résultat de la comparaison,
**caractérisé en ce que** le processeur est adapté à générer l'au moins un paquet de test en transformant la description de politique de pare-feu en une représentation de spécification formelle incluant une définition formelle de la performance prédéterminée comme une fonction mathématique, et
dans lequel la comparaison avec la performance prédéterminée est exécutée en référence à la définition formelle de la performance prédéterminée de manière à identifier si le pare-feu met en oeuvre la politique de pare-feu.

7. Système selon la revendication 6, dans lequel le processeur est adapté à générer un ensemble de cas de test sur la base des données de politique de pare-feu, dans lequel l'ensemble de cas de test comprend un ou plusieurs cas de test.
